# EUROPEAN PATENT SPECIFICATION

(11) **EP 1 765 739 B1**
(45) Date of publication and mention of the grant of the patent: **14.08.2019**
(21) Application number: 04766863.7
(22) Date of filing: 29.09.2004
(51) Int. Cl.: C03C 17/34, G02B 1/11

(54) **TRANSPARENT SUBSTRATE COMPRISING AN ANTI-REFLECTIVE STACK OF LAYERS**
DURCHLÄSSIGES SUBSTRAT MIT EINER ANTIREFLEXBESCHICHTUNG
SUBSTRAT TRANSPARENT COMPRENANT UN EMPILEMENT ANTIREFLECHISSANT DE COUCHES

(30) Priority: 29.09.2003 EP 03103596
(43) Date of publication of application: 28.03.2007
(73) Proprietor: AGC Glass Europe, 1348 Louvain-la-Neuve (BE)
(72) Inventor: HEVESI, Kadosa, B-6040 Jumet (BE); ANDO, Eiichi, Asahi Glass Company Limited, Tokyo, 130-0013 (JP); MITSUI, Akira, Asahi Glass Company Limited, Tokyo, 130-0013 (JP)
(74) Representative: Bayot, Daisy
(86) International application number: PCT/EP2004/052351
(87) International publication number: WO 2005/030663

(56) References cited:
- EP-A- 0 933 654
- US-A- 4 988 164
- US-A- 5 170 291
- PATENT ABSTRACTS OF JAPAN vol. 014, no. 311 (M-0994), 4 July 1990 (1990-07-04) -& JP 02 102036 A (NIPPON SHEET GLASS CO LTD), 13 April 1990 (1990-04-13)

## Description

The present invention relates to a transparent substrate, in particular of glass, coated with a stack of layers that is anti-reflective in visible light, comprising a series of layers deposited by a vacuum deposition process. The invention also relates to a process for the production of such a coated substrate as well as its use in a glazing and the glazing obtained.

Glass substrates comprising multilayer anti-reflective coatings composed of transparent dielectric materials with different refractive index are known.

For example, coatings comprising two layers of dielectric materials are known, wherein the first layer deposited on the substrate has a high reflective index and the second layer deposited on the first has a low reflective index.

Coatings composed of 3 layers of dielectric materials have also been described. The precise selection of the indexes and thicknesses of the layers allows an anti-reflective effect to be achieved.

Other anti-reflective coatings comprise 4 layers of transparent dielectric materials and with alternating layers with high and low refractive index. EP 933 654, for example, describes such stack of layers, the second and fourth layers being composed in particular of SiO₂. US5170291 discloses a further example of such stack of 4 layers, where the fourth layer applied to the third layer is, preferably, a low-refracting SiO2 layer.

All these anti-reflective stacks of layers deposited by vacuum deposition techniques have a relatively low mechanical strength. Pyrolytic deposition processes, which enable layers considered to be "hard" to be obtained, could be advantageously used for layers to be deposited on outer faces of a glazing. However, pyrolytic deposition processes are not very flexible in production. The number of layers that can be deposited and the limited choice of materials that can be deposited do not allow an anti-reflective lamination structure with 4 layers to be obtained by pyrolytic deposition in viable industrial conditions.

Therefore, there is a need to deposit transparent substrates, in particular of glass, coated with an anti-reflective layer, which is deposited using vacuum deposition and has an improved mechanical strength.

It has surprisingly been found that it is possible to obtain layers deposited by a vacuum deposition process that have good mechanical strength and retain an anti-reflective effect by applying a doped surface protection layer. Moreover, it has been possible to further improve the mechanical strength by using medium-frequency bipolar power supplies for the deposits of silicon oxide.

The present invention relates to a substrate as described in the claims as well as a process for the production and the use of a glazing composed of such a substrate also as described in the claims.

Additional advantages of using bipolar power supplies for depositing silicon oxide, in comparison with a DC sputtering, is the easiness of the process because 1) the plasma is confined between the two targets which reduces pollution of the environment by a widespread plasma, and 2) much less electrical arcs are generated, which avoids frequent reconditioning of the targets.

It has been found that it is particularly interesting to subdivide the fourth layer in 2 sub-layers both based on silicon oxide differently doped.

And furthermore, the use of a third layer with a optical thickness higher than λ_{O}/4 has advantages in term of angular stability with regards to the colour in reflection. In general a neutral colour in reflection is desired with colorimetric index a* and b* comprised between -10 and 1.

The present invention is illustrated in a non-restrictive manner by the embodiments below with reference to the figures.

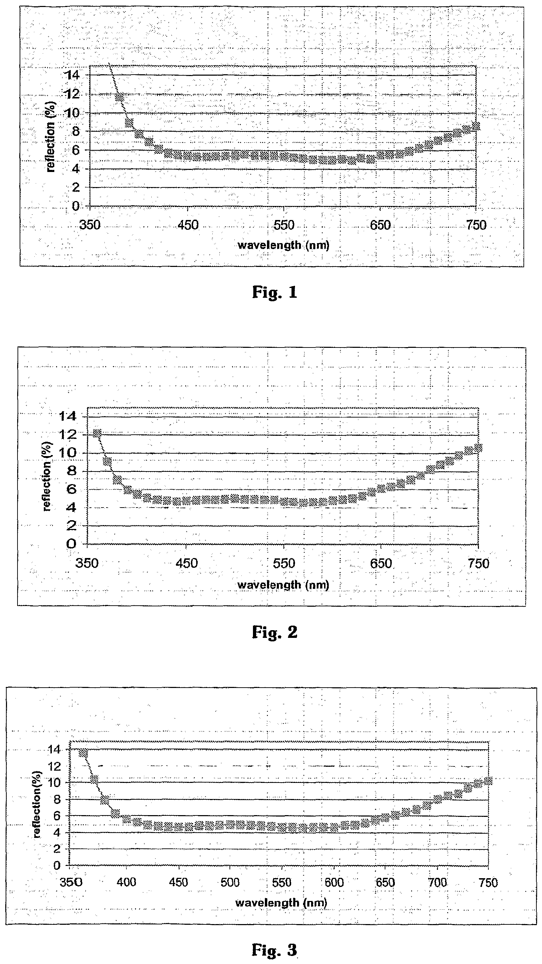

Figures 1, 2 and 3 show the reflection spectra of the substrate respectively coated in accordance with Comparative Example 1 and Examples 2 and 3.

### Comparative Example 1:

A stack : glass / TiO₂ / SiO₂: Al / TiO₂ / SiO₂:Al is formed by magnetron sputtering on a 2.1 mm thick substrate of soda-lime type clear mineral glass.

The deposition conditions of the different layers forming the stack are as follows.

A first layer of titanium oxide was deposited on the substrate using a Ti metal target in a mixed atmosphere of argon and oxygen (67.6 10⁻³ Pa.m³/s of Ar and 60.8 10⁻³ Pa.m³/s of 02), the pressure amounted to 4.2 mbar. The thickness of the deposit was in the order of 10.6 nm.

The second layer was formed using a couple of Si targets doped with 6% Al in a mixed atmosphere of argon and oxygen (135.2 10⁻³ Pa.m³/s of Ar and 76.05 10⁻³ Pa.m³/s of 02), the pressure amounted to 7.0 mbar. The electric power used supplied a rectangular amplitude-symmetric bipolar voltage to the targets. One period of this signal can be described as follows: +520V for 10 µsec, 0V for 10 µsec, - 520V for 10 µsec, 0V for 10 µsec. The thickness of the deposit was in the order of 27.9 nm.

The third layer was deposited in the same conditions as the first. The thickness of the layer was in the order of 116.9 nm.

The fourth layer was deposited in a similar manner to that of the second layer. The deposit thickness was in the order of 83.4 nm and the reflective index was 1.48.

The reflection spectrum of the lamination structure described above is shown in Figure 1 and exhibits the typical characteristics of an anti-reflective coating with four alternating layers with high and low reflective index.

The abrasion resistance was evaluated by means of a sand abrasion test: a felt pad impregnated with an aqueous solution containing fine sand was caused to move linearly back and forth on the surface of the tested sample. After 600 runs the sample was examined and a classification given depending on the rate of abrasion of the lamination structure. The lamination structure described in Example 1 was given a classification of 3. An identical lamination structure, in which the layers of SiO₂:Al had been deposited with an electric power supply emitting a continuous signal would only typically attain a classification of 1 to 2.

### Example 2:

A lamination structure: glass / TiO₂ / SiO₂:Al / TiO₂ / SiO₂:Al / SiO₂:Zr was formed. The first four layers were deposited in a similar manner to that of Comparative Example 1. A fifth layer of SiO₂:Zr was formed using an Si target doped with 10% Zr in a mixed atmosphere of argon and oxygen (60.8 10⁻³ Pa.m³/s of Ar and 84.5 10⁻³ Pa.m³/s of O₂), the pressure amounted to 3.4 mbar.

The first three layers had similar thicknesses to those of Comparative Example 1. The thickness of the fourth layer was 63.9 nm and the thickness of the fifth layer was 12 nm.

The reflection spectrum of the lamination structure described above is shown in Figure 2 and this also exhibits the typical characteristics of an anti-reflective coating with four alternating layers with high and low reflection factor.

After 600 runs of the sand abrasion pad, the stack described in Example 2 was given a classification of 4.5.

### Example 3:

A stack : glass / TiO₂ / SiO₂:Al / TiO₂ / SiO₂:Al / SiON was formed. The first four layers were deposited in a similar manner to that of Comparative Example 1. A fifth layer of SiON was formed using an Si target doped with 6% Al in a mixed atmosphere of argon, oxygen and nitrogen (126.75 10⁻³ Pa.m³/s of Ar, 40.6 10⁻³ Pa.m³/s of O₂ and 42.25 10⁻³ Pa.m³/s of N2), the pressure amounted to 6.6 mbar.

The first three layers had similar thicknesses to those of Comparative Example 1. The thickness of the fourth layer was 70.4 nm (704 Å) and the thickness of the fifth layer was 6 nm (60 Å). The reflection spectrum of the lamination structure described above is shown in Figure 3 and this also exhibits the typical characteristics of an anti-reflective coating with four alternating layers with high and low reflection factor.

After 600 runs of the sand abrasion pad, the lamination structure described in Example 3 was given a classification of 3.5.

It is truly surprising to obtain a substrate coated with an anti-reflective stack formed by magnetically enhanced sputtering which has a mechanical strength higher than 3.

No such substrates have ever been described hitherto.

## Claims

1. Transparent substrate, in particular of glass, coated with a stack of layers deposited using a vacuum deposition process, this lamination structure successively consisting in :
i) a layer with a high refractive index
ii) a layer with a low refractive index
iii) a second layer with a high refractive index
iv) a second layer with a low refractive index composed of two sub-layers of different composition both composed of a silicon oxide doped with a metal element,
the optical thickness of layer iii) being higher than λ_{O}/4 where λ_{O} is the central wavelength of the anti-reflection coating,
layers i) and iii) having an index higher than 2.1, and
layers ii) and iv) having an index in the range between 1.4 and 1.8
wherein layers ii) and iv) are deposited by magnetically enhanced sputtering using a cathode supplied by a bipolar signal of the sinusoidal or rectangular type.

2. Substrate according to the preceding claim, **characterised in that** layers i) and iii) have an index higher than 2.3.

3. Substrate according to any one of the preceding claims, **characterised in that** layers i) and iii) comprise a dielectric material selected from amongst titanium, zirconium, cerium, niobium oxide or mixed oxides containing at least one of these elements.

4. Substrate according to any one of the preceding claims, **characterised in that** layers ii) and iv) have an index in the range between 1.45 and 1.7, and more preferred in the range between 1.45 and 1.6.

5. Substrate according to any one of the preceding claims, **characterised in that** layers ii) and iv) comprise a dielectric material comprising silicon oxide, preferably doped with an element selected from aluminium and zirconium.

6. Substrate according to any one of the preceding claims, **characterised in that** the geometrical thicknesses of each of the layers are in the range of:
between 7 and 17 nm, preferably between 8.5 and 15 nm, for layer i),
between 22 and 45 nm, preferably between 26 and 41 nm, for layer ii),
between 85 and 150 nm, preferably between 105 and 140 nm, for layer iii),
between 65 and 110 nm, preferably between 80 and 97 nm, for layer iv).

7. Substrate according to any one of the preceding claims, **characterised in that** the optical thicknesses of each of the layers are in the range of :
between 15 and 42 nm, preferably between 20 and 36 nm, for layer i),
between 32 and 67 nm, preferably between 38.5 and 60 nm, for layer ii),
between 214 and 380 nm, preferably between 252 and 350 nm, for layer iii),
between 100 and 157 nm, preferably between 118 and 143 nm, for layer iv).

8. Substrate according to claim 1, **characterised in that** the first sub-layer of layer iv) is composed of silicon oxide, doped with a metal element preferably selected from aluminium and zirconium.

9. Substrate according to any one of claims 7 to 8 **characterised in that** the second sub-layer of layer iv) comprises a silicon oxynitride or a silicon oxide doped in particular with zirconium.

10. Process for the production of a transparent substrate coated with an anti-reflective stack comprising the deposition using a vacuum-type deposition process by magnetron sputtering of:
i) a layer of dielectric materials with a high refractive index,
ii) a layer of dielectric materials with a low refractive index
iii) a layer of dielectric material with a high refractive index
iv) a layer of dielectric materials with a low refractive index,
layers i) and iii) having an index higher than 2.1, and
layers ii) and iv) having an index in the range between 1.4 and 1.8.
layers ii) and iv) being deposited by magnetically enhanced sputtering using a cathode supplied by a sinusoidal or rectangular bipolar signal.

11. Process according to Claim 10, **characterised in that** layers ii) and/or iv) are deposited using dual-target cathodes.

12. Process according to any one of Claims 10 to 11 for the production of a substrate according to any one of Claims 1 to 9.

13. Use of a substrate according to any one of Claims 1 to 9 as anti-reflective glazing for architectural applications.

## Patentansprüche

1. Durchlässiges Substrat, insbesondere aus Glas, welches mit einem Stapel von Schichten beschichtet ist, die unter Verwendung eines Vakuumabscheidungsverfahrens abgeschieden werden, wobei diese Laminierungsstruktur aufeinanderfolgend besteht aus:
i) einer Schicht mit einem hohen Brechungsindex,
ii) einer Schicht mit einem niedrigen Brechungsindex,
iii) einer zweiten Schicht mit einem hohen Brechungsindex,
iv) einer zweiten Schicht mit einem niedrigen Brechungsindex, bestehend aus zwei Subschichten mit unterschiedlicher Zusammensetzung, die beide aus einem Siliciumoxid bestehen, das mit einem Metallelement dotiert ist,
wobei die optische Dicke der Schicht iii) höher ist als λ_{O}/4, wobei λ_{O} die zentrale Wellenlänge der Antireflexionsbeschichtung ist,
wobei die Schichten i) und iii) einen höheren Index als 2,1 aufweisen, und
wobei die Schichten ii) und iv) einen Index im Bereich zwischen 1,4 und 1,8 aufweisen,
wobei die Schichten ii) und iv) durch magnetverstärktes Sputtern unter Verwendung einer Kathode abgeschieden werden, der ein bipolares Signal des Sinus- oder Rechteck-Typs zugeführt wird.

2. Substrat nach dem vorhergehenden Anspruch,
**dadurch gekennzeichnet, dass** die Schichten i) und iii) einen höheren Index als 2,3 aufweisen.

3. Substrat nach einem der vorhergehenden Ansprüche,
**dadurch gekennzeichnet, dass** die Schichten i) und iii) ein dielektrisches Material umfassen, ausgewählt aus Titan, Zirconium, Cer, Nioboxid oder gemischten Oxiden, die mindestens eines dieser Elemente enthalten.

4. Substrat nach einem der vorhergehenden Ansprüche,
**dadurch gekennzeichnet, dass** die Schichten ii) und iv) einen Index im Bereich zwischen 1,45 und 1,7, und bevorzugter im Bereich zwischen 1,45 und 1,6, aufweisen.

5. Substrat nach einem der vorhergehenden Ansprüche,
**dadurch gekennzeichnet, dass** die Schichten ii) und iv) ein dielektrisches Material umfassen, das Siliciumoxid umfasst, vorzugsweise dotiert mit einem Element, ausgewählt aus Aluminium und Zirconium.

6. Substrat nach einem der vorhergehenden Ansprüche, **dadurch gekennzeichnet, dass** die geometrische Dicke jeder der Schichten im Bereich liegt von:
zwischen 7 und 17 nm, vorzugsweise zwischen 8,5 und 15 nm, für die Schicht i),
zwischen 22 und 45 nm, vorzugsweise zwischen 26 und 41 nm, für die Schicht ii),
zwischen 85 und 150 nm, vorzugsweise zwischen 105 und 140 nm, für die Schicht iii),
zwischen 65 und 110 nm, vorzugsweise zwischen 80 und 97 nm, für die Schicht iv).

7. Substrat nach einem der vorhergehenden Ansprüche,
**dadurch gekennzeichnet, dass** die optische Dicke jeder der Schichten im Bereich liegt von:
zwischen 15 und 42 nm, vorzugsweise zwischen 20 und 36 nm, für die Schicht i),
zwischen 32 und 67 nm, vorzugsweise zwischen 38,5 und 60 nm, für die Schicht ii),
zwischen 214 und 380 nm, vorzugsweise zwischen 252 und 350 nm, für die Schicht iii),
zwischen 100 und 157 nm, vorzugsweise zwischen 118 und 143 nm, für die Schicht iv).

8. Substrat nach Anspruch 1,
**dadurch gekennzeichnet, dass** die erste Subschicht der Schicht iv) aus Siliciumoxid besteht, dotiert mit einem Metallelement, das vorzugsweise aus Aluminium und Zirconium ausgewählt ist.

9. Substrat nach einem der Ansprüche 7 bis 8,
**dadurch gekennzeichnet, dass** die zweite Subschicht der Schicht iv) ein Siliciumoxynitrid oder ein Siliciumoxid, dotiert insbesondere mit Zirconium, umfasst.

10. Verfahren zur Herstellung eines durchlässigen Substrats, das mit einem Antireflexstapel beschichtet ist, umfassend das Abscheiden unter Verwendung eines Abscheidungsverfahrens vom Vakuum-Typ durch Magnetron-Sputtern von:
i) einer Schicht aus dielektrischen Materialien mit einem hohen Brechungsindex,
ii) einer Schicht aus dielektrischen Materialien mit einem niedrigen Brechungsindex,
iii) einer Schicht aus einem dielektrischen Material mit einem hohen Brechungsindex,
iv) einer Schicht aus dielektrischen Materialien mit einem niedrigen Brechungsindex,
wobei die Schichten i) und iii) einen höheren Index als 2,1 aufweisen, und
wobei die Schichten ii) und iv) einen Index im Bereich zwischen 1,4 und 1,8 aufweisen,
wobei die Schichten ii) und iv) durch magnetverstärktes Sputtern unter Verwendung einer Kathode abgeschieden werden, der ein sinusförmiges oder rechteckiges bipolares Signal zugeführt wird.

11. Verfahren nach Anspruch 10,
**dadurch gekennzeichnet, dass** die Schichten ii) und/oder iv) unter Verwendung von Dual-Target-Kathoden abgeschieden werden.

12. Verfahren nach einem der Ansprüche 10 bis 11, zur Herstellung eines Substrats nach einem der Ansprüche 1 bis 9.

13. Verwendung eines Substrats nach einem der Ansprüche 1 bis 9, als Antireflexverglasung für Architekturanwendungen.

## Revendications

1. Substrat transparent, en particulier en verre, revêtu avec une pile de couches déposées au moyen d'un procédé de dépôt sous vide, cette structure de stratification étant constituée successivement de :
i) une couche ayant un indice de réfraction élevé
ii) une couche ayant un indice de réfraction faible
iii) une deuxième couche ayant un indice de réfraction élevé
iv) une deuxième couche ayant un indice de réfraction faible composée de deux sous-couches de compositions différentes, toutes deux composées d'un oxyde de silicium dopé avec un élément métallique,
l'épaisseur de couche optique iii) étant supérieure à λ_{ο}/4 où λ_{ο} est la longueur d'onde centrale du revêtement antireflet,
les couches i) et iii) ayant un indice supérieur à 2,1, et
les couches ii) et iv) ayant un indice dans la plage comprise entre 1,4 et 1,8
dans lequel les couches ii) et iv) sont déposées par pulvérisation magnétiquement activée au moyen d'une cathode alimentée par un signal bipolaire de type sinusoïdal ou rectangulaire.

2. Substrat selon la revendication précédente, **caractérisé en ce que** les couches i) et iii) ont un indice supérieur à 2,3.

3. Substrat selon l'une quelconque des revendications précédentes, **caractérisé en ce que** les couches i) et iii) comprennent un matériau diélectrique choisi parmi les oxydes de titane, de zirconium, de cérium, de niobium ou des oxydes mixtes contenant au moins un de ces éléments.

4. Substrat selon l'une quelconque des revendications précédentes, **caractérisé en ce que** les couches ii) et iv) ont un indice dans la plage comprise entre 1,45 et 1,7, et plus préférablement dans la plage comprise entre 1,45 et 1,6.

5. Substrat selon l'une quelconque des revendications précédentes, **caractérisé en ce que** les couches ii) et iv) comprennent un matériau diélectrique comprenant de l'oxyde de silicium, de préférence dopé avec un élément choisi parmi l'aluminium et le zirconium.

6. Substrat selon l'une quelconque des revendications précédentes, **caractérisé en ce que** les épaisseurs géométriques de chacune des couches sont dans la plage comprise :
entre 7 et 17 nm, de préférence entre 8,5 et 15 nm, pour la couche i),
entre 22 et 45 nm, de préférence entre 26 et 41 nm, pour la couche ii),
entre 85 et 150 nm, de préférence entre 105 et 140 nm, pour la couche iii),
entre 65 et 110 nm, de préférence entre 80 et 97 nm, pour la couche iv).

7. Substrat selon l'une quelconque des revendications précédentes, **caractérisé en ce que** les épaisseurs optiques de chacune des couches sont dans la plage comprise :
entre 15 et 42 nm, de préférence entre 20 et 36 nm, pour la couche i),
entre 32 et 67 nm, de préférence entre 38,5 et 60 nm, pour la couche ii),
entre 214 et 380 nm, de préférence entre 252 et 350 nm, pour la couche iii),
entre 100 et 157 nm, de préférence entre 118 et 143 nm, pour la couche iv).

8. Substrat selon la revendication 1, **caractérisé en ce que** la première sous-couche de la couche iv) est composée d'oxyde de silicium, dopé avec un élément métallique de préférence choisi parmi l'aluminium et le zirconium.

9. Substrat selon l'une quelconque des revendications 7 à 8, **caractérisé en ce que** la deuxième sous-couche de la couche iv) comprend un oxynitrure de silicium ou un oxyde de silicium dopé, en particulier, avec du zirconium.

10. Procédé de production d'un substrat transparent revêtu avec une pile antireflet comprenant le dépôt au moyen d'un procédé de dépôt de type sous vide par pulvérisation magnétron de :
i) une couche de matériaux diélectriques ayant un indice de réfraction élevé,
ii) une couche de matériaux diélectriques ayant un indice de réfraction faible
iii) une couche de matériau diélectrique ayant un indice de réfraction élevé
iv) une couche de matériaux diélectriques ayant un indice de réfraction faible,
les couches i) et iii) ayant un indice supérieur à 2,1, et
les couches ii) et iv) ayant un indice dans la plage comprise entre 1,4 et 1,8,
les couches ii) et iv) étant déposées par pulvérisation magnétiquement activée au moyen d'une cathode alimentée par un signal bipolaire sinusoïdal ou rectangulaire.

11. Procédé selon la revendication 10, **caractérisé en ce que** les couches ii) et/ou iv) sont déposées au moyen de cathodes à double cible.

12. Procédé selon l'une quelconque des revendications 10 à 11 pour la production d'un substrat selon l'une quelconque des revendications 1 à 9.

13. Utilisation d'un substrat selon l'une quelconque des revendications 1 à 9 en tant que vitrage antireflet pour des applications architecturales.
